# EUROPEAN PATENT APPLICATION

(11) **EP 1 790 851 A2**
(43) Date of publication of application: **30.05.2007**
(21) Application number: 06124885.2
(22) Date of filing: 28.11.2006
(51) Int. Cl.: F03D 7/04

(54) **Windpark control system**

(30) Priority: 29.11.2005 US 288081
(71) Applicant: General Electric Company, Schenectady, NY 12345 (US)
(72) Inventor: SCHRAM, Christian, 80339, Muenchen (DE); VYAS, Parag, 80796, Muenchen (DE)
(74) Representative: Bedford, Grant Richard

(57) **Abstract**

A method and system for controlling a windpark power plant includes a central processing and control unit (16) operatively coupled to wind turbines (12) in the windpark (10) to receive data from and selectively transmit at least one of data and control signals to each wind turbine, to reduce fatigue loads and comply with power limits.

## Description

The invention relates to the operation and control of a large group of wind turbines arranged as a windpark.

As is widely known, the largest part of the high stresses that tend to shorten the life span of a wind turbine will occur at high wind velocities. According to known approaches for reducing stresses on the rotor, nacelle, tower and foundation, the rotational speed of the rotor of a wind turbine and the power output of the turbine can be decreased in the case of high wind velocity.

Wind turbines are conventionally equipped with measurement systems and control systems to enable them to independently react to changing wind conditions. These systems are designed to maximize energy capture while minimizing the impact of fatigue and extreme loads. The effectiveness of these control systems is constrained by limitations on sensor technologies. In this regard, measurement systems and detectors local to the particular wind turbine necessarily operate in a reaction mode, reacting to conditions already existing at the wind turbine. Communicating data in the form of wind conditions detected upstream in the wind flow direction of the wind turbine allows the respective wind turbine to anticipate conditions and adjust rotor speed, blade pitch and the like proactively rather than reactively. Reference is made in this regard to U.S. Patent No. 6,850,821, the disclosure of which is incorporated herein by this reference.

The above-outlined known approach of monitoring and communicating wind conditions to a downstream turbine and reducing the power output in case of high wind velocities makes it possible, for example, in a variable-speed pitch plant with a control algorithm for controlling the rotor speed and/or pitch angle averaged over time, to obtain high ratios between the rotor diameter and the generator performance without an accompanying increase in component fatigue as compared to conventionally designed turbines.

Besides upstream wind conditions, upstream turbine(s) generate a wake which includes turbulence which increases the fatigue loads downstream. However, this is not addressed by the '821 patent approach.

Furthermore, recently, because in certain areas there are a large number of wind farms close together and because of the nature of wind and the fact that it fluctuates electricity utilities have started to impose restrictions on windparks. For example, utilities may impose limits on how much power an operating wind farm can produce, or may dictate a slower start-up, etc. Such power limits change over time according to the requirements of the utility and are not known by the windpark operator a-priori. This is also not addressed by the '821 patent approach.

According to an embodiment of the invention, these problems are addressed by performing, by means of an already existing or additionally installed sensor array and with an interconnected signal processing and control system, a direct or indirect quantification of the current and projected turbine stresses based on current and upstream conditions and in consideration of any imposed operating restrictions. By comparison with allowable stresses (or correlating values), detected by computation or empirically, the turbines of the windpark will be operated in an optimized manner and/or consistent with any restrictions imposed by the utility.

Other than in the normally used state of the art wherein the operational control process is provided to control the blade angle and/or rotational speed according to fixed functions in dependence on power, blade angle or wind velocity, this novel control process is performed as required due to local conditions, meteorological conditions, and/or operational limits at the respective point in time to thus obtain optimum efficiency.

Thus, the invention may be embodied in a control system for a windpark power plant including plurality of wind turbines, said system comprising a central processing and control unit operatively coupled to said wind turbines to receive data from and transmit at least one of data and control signals to each said wind turbine, said central processing and control unit processing data received from at least one upstream turbine to predict a load impact on turbines downstream thereof, and selectively generating and transmitting control signals to at least one of (1) reduce power of at least one downstream wind turbine to minimize load impact and/or (2) reduce a speed of at least one said upstream turbine to reduce fatigue load and increase power capture in at least one downstream turbine.

The invention may also be embodied in a method of controlling a windpark power plant that includes a plurality of wind turbines and a central processing and control unit operatively coupled to said wind turbines to receive data from and selectively transmit at least one of data and control signals to each said wind turbine, said method comprising: transmitting data from at least one of said turbines to said central processing and control unit; using said transmitted data and stored data to predict load impact on turbines downstream of said at least one turbine; and selectively generating and transmitting control signals from said central processing and control unit to at least one of (1) reduce power of at least one downstream wind turbine to minimize load impact thereon and/or (2) reduce a speed of the at least one upstream turbine to reduce fatigue load and increase power capture in at least one downstream turbine.

The invention may further be embodied in a method of controlling a windpark power plant that includes a plurality of wind turbines and a central processing and control unit operatively coupled to said first and second wind turbines or turbine groups to receive data from and selectively transmit at least one of data and control signals to each said wind turbine, said method comprising: transmitting a measurement of the load and a measurement of the output power from each turbine in the windpark to the central processing and control unit; inputting power limit data to said central processing and control unit; based on the power outputs, the loads, the power limit and stored data, determining which turbines have the least fatigue loads; and selectively commanding at least one of (1) the turbines with the least fatigue loads to produce a higher percentage of the power and/or (2) the turbines with higher loads to produce a lesser percentage of the total power, thereby reducing the load across the entire windpark while complying with said power limit.

These and other objects and advantages of this invention, will be more completely understood and appreciated by careful study of the following more detailed description of the presently preferred exemplary embodiments of the invention taken in conjunction with the accompanying drawings, in which:
FIGURE 1 is a schematic illustration of a windpark, schematically showing wake interaction;
FIGURE 2 is a schematic illustration of a windpark control and turbine coordination system according to an example embodiment of the invention; and
FIGURE 3 is a flow chart showing data collection and processing according to an example embodiment of the invention.

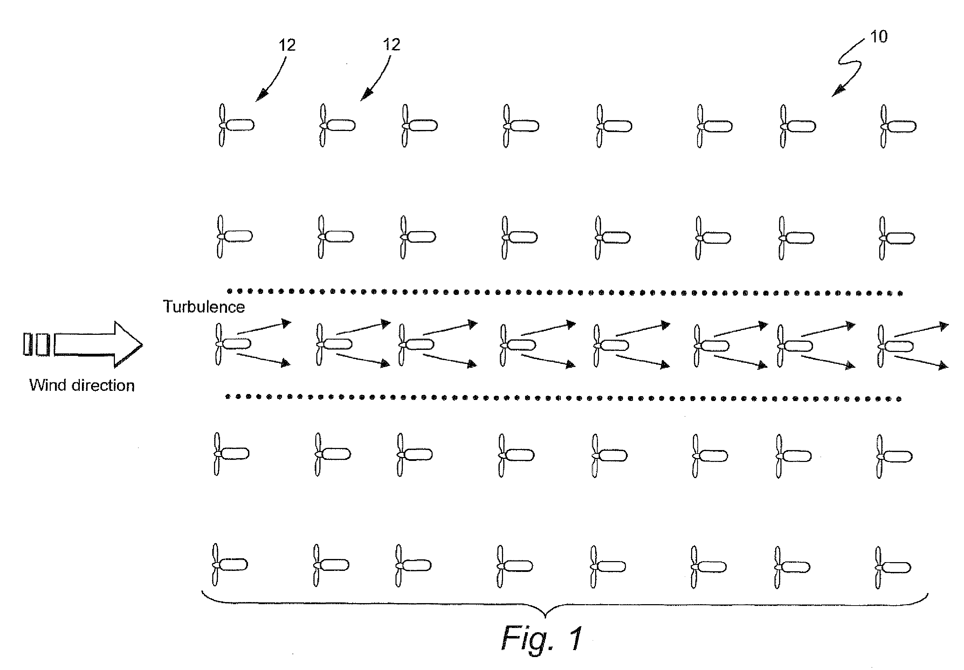

Referring to FIGURE 1, a windpark 10 is schematically depicted comprising a plurality of wind turbines 12. For convenience of explanation, the windpark is depicted as having evenly spaced rows of wind turbines although it is to be understood that more or fewer turbines may be provided and that the turbines may be distributed in varying patterns or arrays depending upon the topography, prevailing wind direction, and the like.

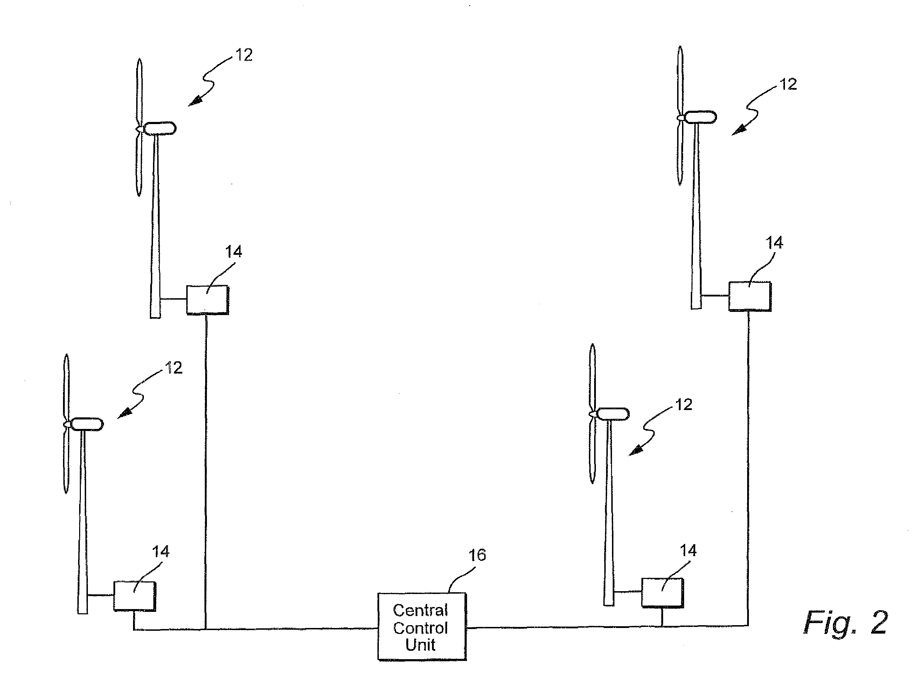

As schematically shown in FIGURE 2, each of the wind turbines 12 has a respective controller 14 which receives signals regarding wind direction, velocity, load and the like and controls the respective turbine accordingly. More particularly, the tower controllers are conventionally provided to receive and act upon local sensor information for the respective turbine tower. Each wind turbine tower has associated with it input values which are locally detected by measurement sensors such as the rotor and generator speeds, the electrical power, the generator torque, the blade or pitch angle and the pitch rate, the wind velocity, and the wind direction. On the basis of these regularly measured values, the individual turbines 12 are controlled according to an algorithm implemented in the local controller 14 (standard control).

According to conventional practice, additional measurement values, e.g., temperatures, hydraulic pressures, tower head accelerations, oil level, and wear indications, may also be detected and allow for determination of certain conditions of the plant and may result in turbine shutdown or other control modifications. The sensors on the turbine can be provided, for example, as acceleration sensors on the tower head and the rotor blade, wire strain gauges on representative points of the support structure, e.g., on the blade root, rotor shaft, and/or base of the tower. Additionally, or alternatively, piezoelectric fibers as described in U.S. Patent No. 6,769,873, incorporated herein by reference, may be used to sense current conditions and stresses on the turbine structure.

According to an example embodiment of the invention, by including additional wind field data, which ideally characterizes the undisturbed on-flow before the rotor but in the presently described embodiment is information from upstream wind turbines, control behavior can be considerably improved. For this purpose use can be made of laser-optical and/or acoustic (ultrasonic) measuring methods which are suited both for measurements on an individual points in the wind field and for measurements of complete wind profiles or wind fields in the rotor plane or far before the rotor plane.

Further improvement of the control behavior can be accomplished by linking the control system of the different turbines of the windpark to each other. Thus, according to an example embodiment of the invention, the data collected by respective turbines is further transmitted to an operatively connected central processing and control unit 16 which receives estimated or measured signals from each turbine in the windpark or a subset of wind turbines in the control set. Although in the illustrated embodiment the respective controllers 14 for the individual turbines 12 are disposed at the respective tower, the controllers for the individual turbine towers may be incorporated in the central control unit. The central processing and control unit, based on the signals received and stored data, makes calculations on the impact of power production and loads on each turbine and control signals are then sent to each respective turbine to actuate the control mechanism local to each turbine, as discussed further below.

Thus, particularly using data of neighboring wind power plants (turbines) located upstream relative to the wind direction, the loading of the plant during wind velocities above the nominal wind is reduced. Notably, turbines located behind other turbines in the wind direction can react exactly and with a suitable delay on wind occurrences which have been registered in the turbine arranged upstream. Thus, unavoidable disadvantages for the following turbines can be compensated for.

Accordingly, turbines experiencing changes in wind conditions can provide advance information to other turbines which will be affected by those same conditions as the wind field evolves. This is accomplished by providing the central processing and control unit 16 for receiving measurements from each turbine, making calculations and sending controller information to the affected turbines. Wind conditions can be estimated by respective upstream turbines using combinations of signals from anemometers, yaw angle, blade load asymmetries, rotor speed, blade angle and the like and other loads and sensors such as laser/optical and/or acoustic (ultrasonic). The measurements thus provide information on wind speed, direction sheer, turbulence, gusts and in particular the presence of extreme gusts. The calculation module makes the use of some of these measurements and is able to determine using preprogrammed algorithms and stored data, the movement of wind flows around the windpark. This can be predicted with knowledge of wind field dynamics, the impact of terrain topography, and wake interactions, for example. The control signal is sent to change the control mode or to set reference commands such as power level, torque demand, speed and the like.

In order to guarantee that the available potential of the plant will not be reduced in a case of a possible failure of another turbine in the wind field, the operating control system is preferably configured such that the standard controllers are separated from other components of the central processing and control unit so that in the event control input from other wind power plants (wind turbines) is not available, the individual turbine will nevertheless remain operational based upon its standard control.

As noted above, FIGURE 1 schematically depicts a wind farm 10 as an array of wind turbines 12 arranged in a grid as a typical configuration. As schematically illustrated, an upstream wind turbine will generate a wake, which includes some turbulence, which increases the fatigue loads downstream. Depending upon which direction the wind blows, the wake and the turbulence following one wind turbine builds up and consequently there are various interactions between the turbines.

In an example embodiment of the invention, the central processing and control unit 16 not only sends a control signal to downstream turbine(s), but in addition or in the alternative sends a control signal to the upstream turbine(s), so that operation of the upstream turbine is adjusted to minimize the impact downstream. Thus, in an example embodiment, instead of the upstream turbine just sending information for use in controlling the downstream turbine, the upstream turbine is directed to alter its own behavior, e.g., to reduce the energy capture of its own turbine, to reduce the load downstream. Thus, according to an example embodiment of the invention, the upstream turbine actually reduces its own power, not to reduce its loads, which may or may not happen, but to reduce the downstream loads.

An algorithm suited for the above purpose is based on the statistical evaluation of one, a plurality, or all of the measured values (e.g., rotor speed, generator performance, pitch angle, pitch rate, wind velocity and wind direction) mentioned among those operating data which are in any event continuously detected in many present day wind power plants, e.g., variable-speed pitch plants. On the basis of measurement and stored data relative to local and meteorological conditions and current stresses on the components, adjustments to the operating conditions of individual turbines can be determined.

Accordingly, in an example embodiment of the invention, if the onset of a large gust is detected by any one wind turbine, the impact on downstream turbines that will be affected by the gust is predicted and relevant information is sent to the gust detecting turbine(s) and/or the downstream turbine(s) to allow control actions to take place to reduce the impact of the gust in terms of load on the downstream turbine(s).

An aspect of the invention also relates to centralized wind turbine control when the utility imposes some limit on how much power an operating wind farm can produce. The imposition of limits is happening with increasing frequency, especially in congested areas where e.g. the capacity of the utility grid is not high enough to cope with peaks in wind power. In those cases, where the maximum power of the whole wind farm is limited, the problem of producing that level of output power is considered, while reducing the load on all the different turbines, with the minimum amount of load spread across all the turbines.

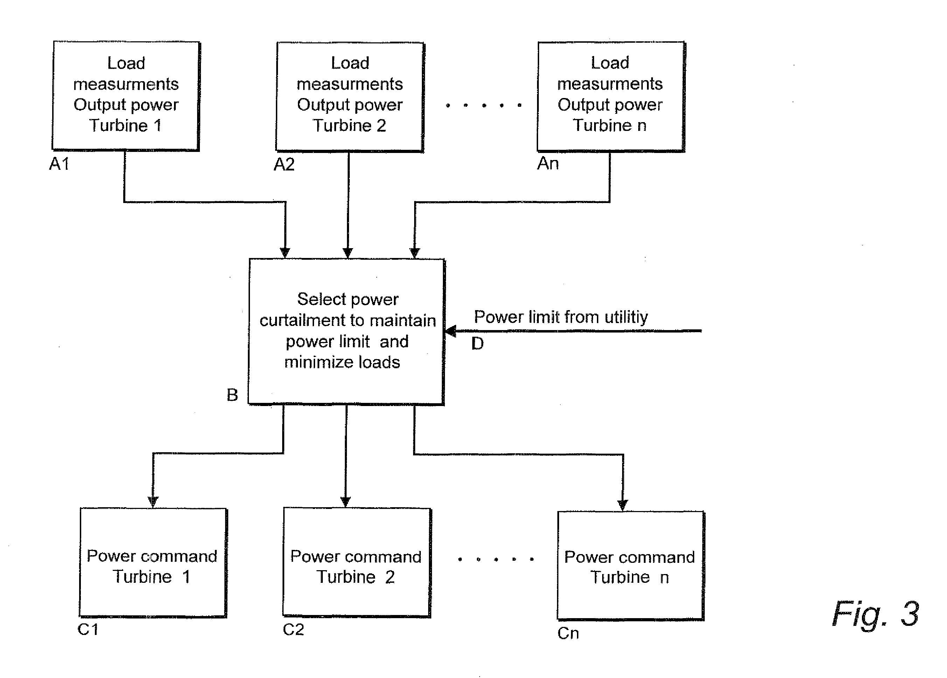

FIGURE 3 is a data flow processing algorithm for implementing centralized control, particularly in the case of utility imposed restrictions on power output. From each turbine (A1, A2, ..., An) in the windpark, in the first instance load measurements and a measurement of the output power are sent to a central processing point B (Central processing and control unit 16). The central processing and control unit looks at all the power outputs, the loads, and the power limit D received from the utility. Based on that information and stored data, the central processing and control unit determines and implements power curtailment, via power commands (C1, C2, ..., Cn), to maintain the power limit and minimize loads. For example, the central processing and control unit can determine which turbines have the least fatigue loads and command those turbines to produce more of the power while commanding the turbines with higher loads to produce less of the power, thereby minimizing the load across the entire wind farm.

Where the wind park is operating in power curtailment mode, another more sophisticated step can be carried out. In this regard, as noted above, there is interaction between the wind turbines due to wake and wake interactions. The central processing and control unit can be adapted to predict what will happen if an upstream turbine is turned on or off and optimization can be achieved based on that prediction as well. So, load, output power, and wind speed and direction from each turbine can be fed to the central processing and control unit and this along with knowledge of the wake interactions can be used to make control decisions to minimize the loads.

Although power output restrictions have been mentioned above, the utility may impose other restrictions as well. For example, the utility may dictate a slow start-up so that the windpark does not export electricity to the grid at too high a rate of change of power. In this example, the central processing and control unit can optimize the operation of the various turbines based on a power limit which is slowly increased over time so that the increase in total power in the windpark is smooth over time rather than fluctuating in large steps. Similarly with shut-down and/or in gusty wind conditions, the central processing and control unit can optimize operation of the wind turbines so that big fluctuations in power are not exported to the grid.

### Example implementations of the invention include:

Extreme gust detection/forecasting - In one example embodiment, wind speed and direction are measured by a first wind turbine or turbine group of a windpark, the central data processing unit is then used to predict load impact on wind turbines downstream thereof. Control signals are then generated to reduce power (rotor speed and/or blade pitch angle) of the downstream wind turbines to minimize extreme load impact. In a second example embodiment, control signals are generated in addition or in the alternative to reduce a speed of the first turbine or group of turbines of the windpark to reduce fatigue load and increase power capture in a turbine or group of turbines downstream thereof. In this example, the rotor speed of the upstream turbines is still above that of the downstream turbines.

Power curtailment without wake interaction -According to a third example embodiment, input loading is received from, for example, rain flow counting and output power from turbines, then turbines with highest loads are determined and selected for curtailment.

Power curtailment with wake interaction - According to a fourth example embodiment, input loading is received from, e.g., rain flow counting, wind speed and direction, and output power from turbines. Central data processing and control unit calculates optimal power production of turbines considering wake interaction with the aim of reducing fatigue loads, and sends output power reference command to each turbine.

Windpark slow startup - According to a fifth example embodiment, wind speed and direction is received from the turbines by the central data processing and control unit. The central data processing and control unit determines a start-up sequence to start the turbines so as to provide minimum wake interactions in order to reduce fatigue loads and so that the increase in total power in the windpark is smooth over time.

Windpark slow startup within ramp-rate limits- According to a fifth example embodiment, wind speed and direction is received from the turbines by the central data processing and control unit. The central data processing and control unit determines a start-up sequence to start the turbines so as to provide minimum wake interactions in order to reduce fatigue loads and so that the increase in total power in the windpark is within ramp-rate limits imposed by the utility.

Windpark slow shutdown - According to a sixth example embodiment, the central data processing and control unit anticipates shut-down due to approaching storm conditions from detected wind conditions, temperatures, and/or barometric pressure, and determines a sequence of turbine shut-down according to wake interactions in order to reduce fatigue loads.

Windpark slow shut-down within ramp-rate limits- According to a seventh example embodiment, wind speed and direction is received from the turbines by the central data processing and control unit. The central data processing and control unit determines a shut-down sequence to shut-down turbines to reduce fatigue loads and so as to stay within ramp-rate limits imposed by the utility.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the appended claims.

### PARTS LIST

windpark 10
wind turbines 12
local wind turbine controller 14
central processing and control unit 16
each turbine in the windpark (A1, A2, . . ., An)
central processing point B
power commands (C1, C2, . . ., Cn)
power limit D

## Claims

1. A control system for a windpark power plant including plurality of wind turbines (12), said system comprising a central processing and control unit (16) operatively coupled to said wind turbines (12) to receive data from and transmit at least one of data and control signals (C1, C2, ..., Cn) to each said wind turbine (12), said central processing and control unit processing data received from at least one upstream turbine to predict a load impact on turbines downstream thereof, and selectively generating and transmitting control signals to at least one of {1} reduce power of at least one downstream wind turbine to minimize load impact and/or {2} reduce a speed of at least one said upstream turbine to reduce fatigue load and increase power capture in at least one downstream turbine.

2. A control system as in claim 1, wherein said control signals to reduce power comprise control signals to change rotor speed and/or blade pitch angle of the at least one downstream wind turbine (12).

3. A control system as in claim 1 or claim 2, wherein said control signals reduce the speed of the upstream turbine, but maintain the rotor speed of the upstream turbine above that of the at least one downstream turbine.

4. A control system of any preceding claim, wherein each said wind turbine (12) includes a local controller (14) for receiving data from the respective turbine.

5. A control system as in claim 4, wherein each said local controller (14) is operatively coupled to said central processing and control unit (16) for transmitting data to and receiving said data and/or control signals (C1, C2, ..., Cn)therefrom.

6. A method of controlling a windpark power plant that includes a plurality of wind turbines (12) and a central processing and control unit (16) operatively coupled to said wind turbines (12) to receive data from and selectively transmit at least one of data and control signals (C1, C2, ..., Cn) to each said wind turbine (12), said method comprising:
transmitting data from at least one of said turbines to said central processing and control unit;
using said transmitted data and stored data to predict load impact on turbines downstream of said at least one turbine; and
selectively generating and transmitting control signals from said central processing and control unit to at least one of (1) reduce power of at least one downstream wind turbine to minimize load impact thereon and/or (2) reduce a speed of the at least one upstream turbine to reduce fatigue load and increase power capture in at least one downstream turbine.

7. A method as in claim 6, wherein said control signals to reduce power comprise control signals to change rotor speed and/or blade pitch angle of the at least one downstream wind turbine (12).

8. A method as in claim 6 or claim 7, wherein said data received from said at least one turbine correspond to locally detected values of at least one of rotor and generator speeds, electrical power, generator torque, blade or pitch angle and pitch rate, wind velocity, and wind direction.

9. A method of any one of claims 6 to 8, wherein said transmitting comprises transmitting a measurement of the load and a measurement of the output power from each turbine (12) in the windpark to the central processing and control unit; and further comprising:
inputting power limit data to said central processing and control unit;
based on the power outputs, the loads, the power limit, and stored data, determining which turbines have the least fatigue loads; and
selectively commanding at least one of (1) the turbines with the least fatigue loads to produce a higher percentage of the power and/or (2) the turbines with higher loads to produce a lesser percentage of the total power, thereby reducing the load across the entire windpark while complying with said power limit.

10. A method as in claim 9, wherein said transmitting further comprises transmitting wind speed and direction data and wherein said central processing and control unit (16) calculates optimal power production of the turbines (12) based on said data and based on wake interaction data with the aim of reducing fatigue loads.
